# EUROPÄISCHE PATENTSCHRIFT

(11) **EP 1 439 934 B1**
(45) Veröffentlichungstag und Bekanntmachung des Hinweises auf die Patenterteilung: **23.03.2005**
(21) Anmeldenummer: 02782901.9
(22) Anmeldetag: 14.10.2002
(51) Int. Cl.: B23Q 1/54, B25J 17/02

(54) **VORRICHTUNG ZUR FÜNFACHSIGEN BEWEGUNG UND/ODER POSITIONIERUNG EINES OBJEKTES**
DEVICE FOR THE DISPLACEMENT AND/OR POSITIONING OF AN OBJECT IN FIVE AXES
DISPOSITIF DE DEPLACEMENT ET/OU DE POSITIONNEMENT D'UN OBJET SELON CINQ AXES

(30) Priorität: 02.11.2001 DE 10153854
(43) Veröffentlichungstag der Anmeldung: 28.07.2004
(73) Patentinhaber: Metrom Mechatronische Maschinen GmbH, 09125 Chemnitz (DE); FRAUNHOFER-GESELLSCHAFT ZUR FÖRDERUNG DER ANGEWANDTEN FORSCHUNG E.V., 80636 München (DE)
(72) Erfinder: SCHWAAR, Claudia, 09232 Hartmannsdorf (DE); NEUGEBAUER, Reimund, 01462 Dresden (DE); SCHWAAR, Michael, 09232 Hartmannsdorf (DE)
(74) Vertreter: Grünecker, Kinkeldey, Stockmair & Schwanhäusser Anwaltssozietät
(86) Internationale Anmeldenummer: PCT/EP2002/011466
(87) Internationale Veröffentlichungsnummer: WO 2003/037562

(56) Entgegenhaltungen:
- DE-A- 2 800 273
- DE-A- 10 008 745
- DE-A- 19 840 886
- DE-A- 19 952 530
- US-A- 4 569 627
- US-A- 4 776 749
- US-B1- 6 203 254
- US-B1- 6 257 957

## Beschreibung

Die vorliegende Erfindung betrifft eine Bewegungs- und/oder Positioniervorrichtung mit einer fünfachsigen Bewegung und/oder Positionierung eines Objektes. Eine solche Vorrichtung ist aus dem Dokument DE 198 40 886 A bekannt, das als nächstliegender Stand der Technik angesehen wird.

Die vorliegende Bewegungs- und/oder Positioniervorrichtung ist insbesondere bei Maschinen, welche ein Objekt in fünf Freiheitsgraden bewegen, wie beispielsweise Werkzeugmaschinen, Bearbeitungsmaschinen sowie Maschinen zur Montage und Handhabung, einsetzbar.

Bekannte Bewegungs- und/oder Positioniervorrichtungen nutzen häufig Anordnungen mehrerer miteinander verbundener und aufeinander aufbauender Bewegungsplattformen mit einem seriellen Aufbau entsprechender Bewegungsachsen der Bewegungsplattformen. Derartige serielle Anordnungen sind beispielsweise bei konventionellen Werkzeugmaschinen mit zwei Bewegungsplattformen realisiert, wobei die Antriebsachsen einer solchen konventionellen Werkzeugmaschine aufeinander aufbauen. Dies bedeutet, dass eine erste Achse eine nachfolgende, meist orthogonal zur ersten Achse angeordnete zweite Achse mitträgt.

In derartigen Bewegungs- und/oder Positioniervorrichtungen mit seriellen Anordnungen sind folglich zur Realisierung von fünfachsigen Bewegungen in der Regel auch fünf eigenständige Antriebe erforderlich.

Bei seriellen Anordnungen ist es ausgehend von den vorstehenden Ausführungen notwendig, bei einer Bewegung bzw. Positionierung eines Objektes eine kombinierte Masse aller hintereinander geschalteter Bewegungsplattformen gemeinsam zu bewegen. Angewandt auf die einzelnen Antriebe der Bewegungsplattformen bedeutet dies, dass von den jeweiligen ersten Antrieben einer Antriebskette die größten Massen bewegt werden müssen und dass die einzelnen Antriebe einer Antriebskette jeweils unterschiedliche Massen bewegen. Dementsprechend weisen derartige Bewegungs- und/oder Positioniervorrichtungen eine geringe Dynamik bei der Bewegung bzw. Positionierung auf. Zudem werden eventuell auftretende Bewegungs- bzw. Positionierungsfehler durch die gekoppelte Bewegung der Bewegungsplattformen zueinander bei der Bewegung und/oder Positionierung aufsummiert. Weiterhin weisen derartige serielle Anordnungen eine geringe Anzahl an gleichartigen Bauteilen, also Wiederholungsbauteilen auf, wodurch eine Modularisierung nur eingeschränkt möglich ist.

Als Alternative bieten sich Parallelkinematiken an. Hierzu zählen auch die allgemein als Hexapode bezeichneten Bewegungs- und/oder Positionierungsvorrichtungen, welche sechs Führungsketten, welche auch als Streben bezeichnet werden, mit jeweils fünf Gelenkfreiheitsgraden aufweisen, wobei in der Regel eine Drehung der Streben (Führungsketten) um ihre eigene Längsachse verhindert ist. Dementsprechend weisen die Streben jeweils ein Gelenk mit drei Freiheitsgraden und ein weiteres Gelenk mit zwei Freiheitsgraden auf, wobei ein Gelenk pro Führungskette als Antrieb ausgeführt ist. Der Antrieb der Führungsketten ist als Dreh- oder Schubantrieb ausgebildet, welcher in einem Gestell gelagert oder in die Führungskette integriert ist.

Somit besitzen derartige Hexapode getriebetechnisch sechs Bewegungsfreiheitsgrade. Da ein zu bewegender bzw. zu positionierender Körper grundsätzlich sechs Freiheitsgrade besitzt, werden auch sechs Antriebe benötigt, um alle sechs Freiheitsgrade zu beeinflussen. Die meisten Bearbeitungsmaschinen benötigen jedoch nur fünf steuerbare Freiheitsgrade. Das trifft z.B. für eine Fräsmaschine zu, bei welcher der sechste Freiheitsgrad die Drehung um die Achse der Frässpindel darstellt.

Ein Nachteil bekannter Hexapoden besteht also darin, dass zu einer Erzeugung von fünf gesteuerten Freiheitsgraden sechs Antriebe verwendet werden müssen.

Ein weiterer Nachteil von Hexapoden ergibt sich durch den aufgrund der sechs Führungsketten stark eingeschränkten Arbeitsraum, welcher sich letztlich durch die Begrenzungen der Schwenkwinkel an einem zu bewegenden Objekt bzw. einem zu bewegenden Objektträger ergibt. Grundsätzlich gilt, dass mit einer steigenden Anzahl an eingesetzten Führungsketten, also einer Gesamtzahl an eingesetzten Streben, welche ein Objekt bzw. einen Objektträger mit dem Gestell verbinden, ein zur Verfügung stehender Arbeitsraum verkleinert wird, da größere Kollisionsbereiche zwischen den Führungsketten diesen Arbeitsraum einschränken.

Bekannt sind weiterhin Anordnungen zur Erzeugung fünfachsiger Bewegungen mit fünf Antrieben, welche gemischt parallel und seriell angeordnet sind. Dabei wurde vorgeschlagen, drei längenveränderliche Führungsketten (nachfolgend auch als Streben bezeichnet) zwischen einem Gestell und einem Objektträger parallel anzuordnen. Mit den zugehörigen Antrieben wird eine Bewegung aller fünf Achsen realisiert, wobei diese Achsen jedoch nicht getrennt steuerbar sind. Zum Ausgleich von notwendigerweise auftretenden Schwenkbewegungen weist der Objektträger zwei weitere seriell angeordnete Schwenkachsen auf.

Ein Nachteil einer derartigen Anordnung besteht darin, dass die seriell angeordneten Schwenkachsen, welche für alle Bewegungen im Raum aktiv sein müssen, eine Dynamik der Bewegungs- und/oder Positioniervorrichtung begrenzen. Zudem ist die erhöhte Masse nachteilig, welche die Antriebe der längenveränderlichen Streben bewegen müssen.

In der US 4,569,627 wird eine Bewegungs- und/oder Positioniervorrichtung vorgeschlagen, bei der ausschließlich drei Streben zur Anbindung des Objektträgers an das Gestell verwandt sind. Diese drei Streben sind in ihrer Länge steuerbar. Zudem können zwei der drei Streben eine Torsionsbewegung ausführen.

Ein wesentlicher Nachteil dieser Bewegungs- und/oder Positioniervorrichtung besteht in der Belastung der Streben in Torsions- bzw. Biegerichtung. Da die als Streben ausgebildeten Stäbe zwar eine hohe Längssteifigkeit aufweisen, in Torsions- und Biegerichtung aber sehr nachgiebig sind, weist die derartige Bewegungs- und/oder Positioniervorrichtung eine begrenzte Gesamtsteifigkeit und eine begrenzte Dynamik auf.

Es ist Aufgabe der vorliegenden Erfindung, eine Bewegungs- und/oder Positioniervorrichtung zu schaffen, welche eine hochdynamische Bewegung und/oder Positionierung von Objekten mit fünf Freiheitsgraden ermöglicht.

Diese Aufgabe wird erfindungsgemäß durch eine Bewegungs- und/oder Positioniervorrichtung mit den Merkmalen des Anspruches 1 gelöst.

Die erfindungsgemäße Bewegungs- und/oder Positioniervorrichtung zur fünfachsigen Bewegung und/oder Positionierung eines Objektes weist einen Objektträger und fünf Koppelglieder, welche den Objektträger in einem Gestell abstützen, auf. Vier der fünf Koppelglieder sind jeweils mittels einer ersten Gelenkanordnung mit jeweils zwei Freiheitsgraden und das entsprechend weitere der fünf Koppelglieder ist mit einer zweiten Gelenkanordnung mit einem Freiheitsgrad mit dem Objektträger verbunden.

Dementsprechend bildet die erfindungsgemäße Bewegungs- und/oder Positioniervorrichtung eine Parallelkinematik mit fünf Koppelglieder für eine hochdynamische Bewegungs- und/oder Positionierung des Objektes.

Gegenüber Hexapoden wird bei der vorliegenden Bewegungs- und/oder Positioniervorrichtung ein Koppelglied (und damit auch ein Antriebsstrang) eingespart. Dadurch wird ein vergleichsweise großer Arbeitsraum und insbesondere auch ein großer Anstellwinkel des Objektträgers sichergestellt. Folglich weist die vorliegende Bewegungs- und/oder Positioniervorrichtung ein vorteilhafteres Verhältnis zwischen notwendigem Bauraum und nutzbarem Arbeitsraum auf.

Mit der Kombination der ersten und der zweiten Gelenkanordnung am Objektträger wird eine hohe Steifigkeit erreicht. Die für eine derartige hochdynamische Bewegung notwendige Steifigkeit ergibt sich dabei insbesondere dadurch, dass die auf ein Objekt, beispielsweise eine Frässpindel, in einem kartesischen Koordinatensystem in allen drei Koordinatenrichtungen X, Y und Z angreifenden Kräfte ausschließlich als Längskräfte in die Koppelglieder eingeleitet werden. Zudem werden auch Momente, welche in den zwei Schwenkrichtungen am Objekt angreifen, ausschließlich als Längskräfte in die Koppelglieder eingeleitet. Weiterhin wirkt sich die Reduzierung der Anzahl an Freiheitsgraden der zweiten Gelenkanordnung dahingehend aus, dass die Drehung des Objektträgers um eine Längsachse desselben, in die Strebe, welche mittels dieser zweiten Gelenkanordnung mit dem Objektträger verbunden ist, als Biegungs- und/oder Torsionsbelastung eingeleitet wird.

Die Steifigkeit der vorliegenden Bewegungs- und/oder Positioniervorrichtung wird dabei mit vergleichsweise kleinen Massen der Maschinenbauelemente erreicht, wodurch gute dynamische Eigenschaften ermöglicht sind.

Die erfindungsgemäße Bewegungs- und/oder Positioniervorrichtung weist zudem eine hohe Modularität, also eine hohe Anzahl an Wiederholungsbauteilen auf.

Gemäß einem bevorzugten Ausführungsbeispiel weist die Bewegungs- und/oder Positioniervorrichtung eine erste Art an ersten Gelenkanordnungen mit zwei Gelenkachsen auf, wobei eine der beiden Gelenkachsen mit einer Längsachse des Objektträgers und/oder einer Längsachse des Objektes überlagert ist, und die beiden Gelenkachsen schnittpunktsfrei zueinander angeordnet sind. Bevorzugterweise sind die ersten der beiden Gelenkachsen sämtlicher erster Gelenkanordnungen der ersten Art mit der gleichen Längsachse des Objektträgers und/oder des Objektes überlagert angeordnet. Die beiden Gelenkachsen der ersten Art an ersten Gelenkanordnungen können dabei senkrecht zueinander angeordnet sein. Zudem kann die erste Art an ersten Gelenkanordnungen einen Gelenkring aufweisen, welcher den Objektträger drehbar um die Längsachse des Objektträgers abstützt, wobei der Gelenkring mit dem zugehörigen Koppelglied über ein weiteres Gelenk mit einem Freiheitsgrad, insbesondere ein Scharniergelenk, verbunden ist.

Gemäß einem weiteren bevorzugten Ausführungsbeispiel weist die vorliegende Bewegungs- und/oder Positioniervorrichtung eine zweite Art an ersten Gelenkanordnungen mit einem Kardanischen Gelenk, insbesondere einem Kreuzgelenk, mit zwei Gelenkachsen auf, wobei die Gelenkachsen desselben sich in einem Gelenkpunkt schneiden. Dieser Gelenkpunkt der zweiten Art an ersten Gelenkanordnungen kann auf der Längsachse des Objektträgers und/oder der Längsachse des Objektes angeordnet sein.

Die vorgenannten vier der fünf Koppelglieder können jeweils mittels einer ersten Gelenkanordnung der ersten Art oder jeweils mittels einer ersten Gelenkanordnung der zweiten Art oder mittels ersten Gelenkanordnungen der ersten und der zweiten Art mit dem Objektträger verbunden sein.

Gemäß einem weiteren bevorzugten Ausführungsbeispiel weist die zweite Gelenkanordnung einen Gelenkring auf, wobei der Gelenkring den Objektträger drehfest um die Längsachse des Objektträgers und/oder die Längsachse des Objektes abstützt und mit dem zugehörigen Koppelglied über ein Gelenk mit einem Freiheitsgrad, insbesondere ein Scharniergelenk, verbunden ist. Insbesondere in diesem Ausführungsbeispiel ist die Modularität der vorliegenden Bewegungs- und/oder Positioniervorrichtung hochgradig erfüllt.

Alternativ kann die zweite Gelenkanordnung ein Gelenk mit einem Freiheitsgrad, insbesondere ein Scharniergelenk, aufweisen, wobei dieses Gelenk das zugehörige Koppelglied unmittelbar mit dem Objektträger verbindet und den Objektträger drehfest um die Längsachse des Objektes abstützt.

Gemäß einem weiteren bevorzugten Ausführungsbeispiel sind die Koppelglieder jeweils mittels einer Kardanischen Aufhängung mit zwei Freiheitsgraden im Gestell gelagert.

Gemäß einem besonders bevorzugten Ausführungsbeispiel ist ein Abstand zwischen den einzelnen Kardanischen Aufhängungen und den ersten Gelenkanordnungen und der zweiten Gelenkanordnung längenveränderlich ausgebildet. Dabei können die Koppelglieder als Gewindespindeln ausgebildet sein, wobei die Gewindespindeln in den Kardanischen Aufhängungen jeweils in einer Halteeinrichtung mit Innengewinde, insbesondere einer Mutter, aufgenommen sind, und wobei die Mutter bezüglich einer Längsachse der Gewindespindeln mittels einer Antriebseinrichtung drehbar ist.

Gleichzeitig oder alternativ zu der Ausbildung der Koppelglieder als Gewindespindeln kann zwischen den ersten Gelenkanordnungen und der zweiten Gelenkanordnung jeweils eine längenveränderliche Einrichtung, insbesondere ein Hubzylinder, angeordnet sein, wobei ein Drehfreiheitsgrad um eine Längsachse des Hubzylinders mittels einer Antriebseinrichtung ermöglicht ist.

Gemäß einem weiteren bevorzugten Ausführungsbeispiel ist ein Abstand zwischen den einzelnen Kardanischen Aufhängungen und den ersten Gelenkanordnungen oder der zweiten Gelenkanordnung längenunveränderlich ausgebildet, wobei die Kardanischen Aufhängungen jeweils entlang einer Achse im Raum, insbesondere entlang einer Längsachse der Koppelglieder, beweglich angeordnet sind.

Die erfindungsgemäße Bewegungs- und/oder Positioniervorrichtung ist insbesondere als Bearbeitungsmaschine ausgebildet, wobei das Objekt eine Spindel und der Objektträger ein Spindelgehäuse umfasst.

Bevorzugterweise weist die vorliegende Bewegungs- und/oder Positioniervorrichtung einen Maschinentisch mit einer weiteren Drehachse, insbesondere zur Aufnahme eines zu bearbeitenden Werkstückes, auf. Die Drehachse des Maschinentisches kann der Längsachse des Objektträgers und/oder der Längsachse des Objektes überlagert sein.

Durch Hinzufügen einer derartigen weiteren Drehachse, welche im Maschinentisch angeordnet ist, wird insbesondere bei Bearbeitungsmaschinen eine vollständige 5-Seiten-Bearbeitung eines Werkstückes ermöglicht.

Die erfindungsgemäße Bewegungs- und/oder Positioniervorrichtung kann eine Steuereinheit zur Steuerung der Bewegung und/oder Positionierung des Objektträgers und/oder des Objektes umfassen. Zudem kann die Steuereinheit programmierbar, insbesondere als NC-Steuereinheit, ausgebildet sein. Die NC-Steuereinheit kann genau fünf Programmierachsen enthalten, wobei die NC-Steuereinheit einen Programmbaustein zu einer Erzeugung von sechs Maschinenachsen aus den fünf im Programm vorgegeben Programmierachsen aufweist, und wobei die sechs Maschinenachsen den einzelnen Koppelgliedern und der Drehachse des Maschinentisches zuordenbar sind. Der Programmbaustein der NC-Steuereinheit kann zu einer Berechnung eines Gütekriteriums und eines Extremwertes für das Gütekriterium vorgesehen sein, wobei mittels des Extremwertes eine Einstellung der Drehachsen des Maschinentisches bestimmbar ist.

Gemäß einem weiteren besonders bevorzugten Ausführungsbeispiel ist das Gestell als ein lkosaeder ausgebildet, wobei die Kardanischen Aufhängungen auf ausgewählten Flächen desselben angeordnet sind.

Weitere bevorzugte Ausführungsbeispiele der Bewegungs- und/oder Positioniervorrichtung sind in den entsprechenden weiteren abhängigen Ansprüchen dargelegt.

Die Erfindung wird nachstehend anhand von bevorzugten Ausführungsbeispielen in Verbindung mit den dazugehörigen Zeichnungen näher erläutert. In den Zeichnungen zeigen:

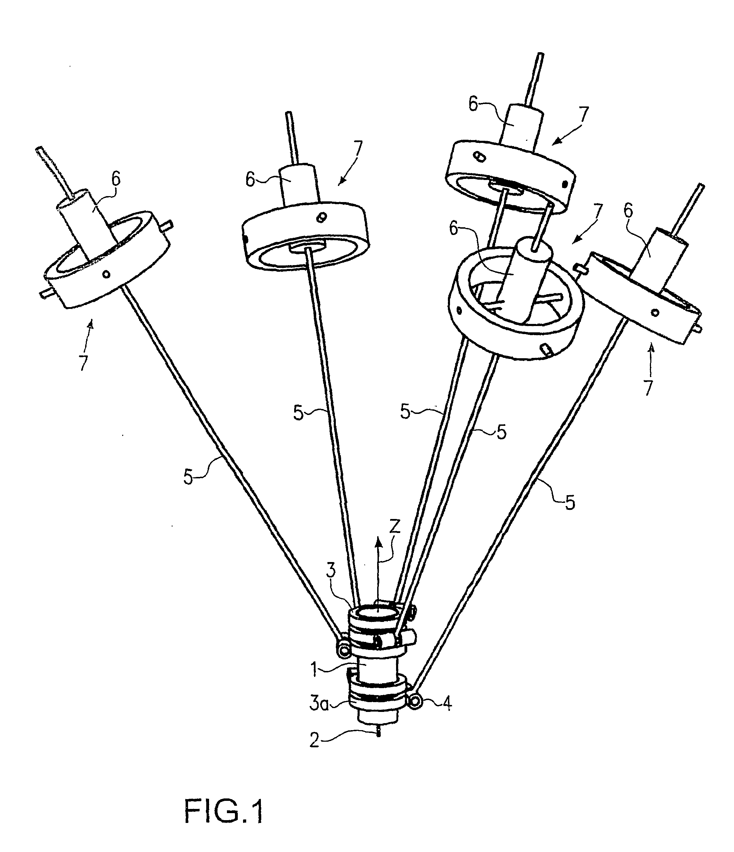

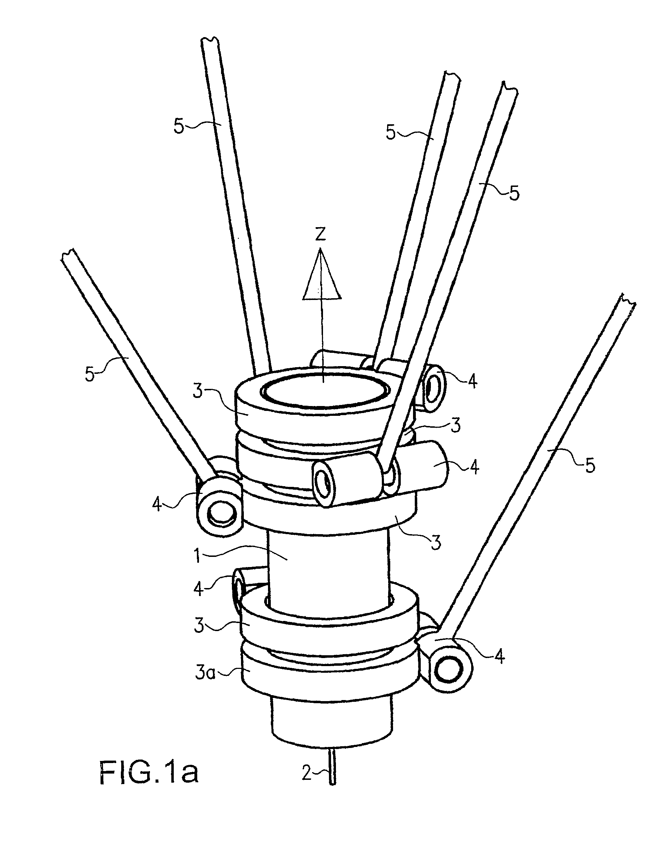

- Fig. 1: eine schematische räumliche Darstellung eines Ausführungsbeispieles der vorliegenden Bewegungs- und/oder Positioniervorrichtung,
- Fig. 1 a: eine vergrößerte Darstellung eines Objektträgers nach Fig. 1 mit einer Aufhängung desselben und einem in demselben aufgenommenen Objekt,
- Fig. 2: eine schematische räumliche Darstellung eines weiteren Ausführungsbei- spieles,
- Fig. 2a: eine vergrößerte Darstellung des Objektträgers nach Fig. 2 mit einer Aufhängung derselben und einem in demselben aufgenommenen Objekt,
- Fig. 3: eine schematische räumliche Darstellung eines weiteren Ausführungsbeispieles mit einem drehbeweglichen Maschinentisch, und
- Fig. 4: eine schematische Darstellung einer Draufsicht und zweier Seitenansichten eines Ausführungsbeispieles eines Gestelles der vorliegenden Bewegungs-und/oder Positioniervorrichtung.

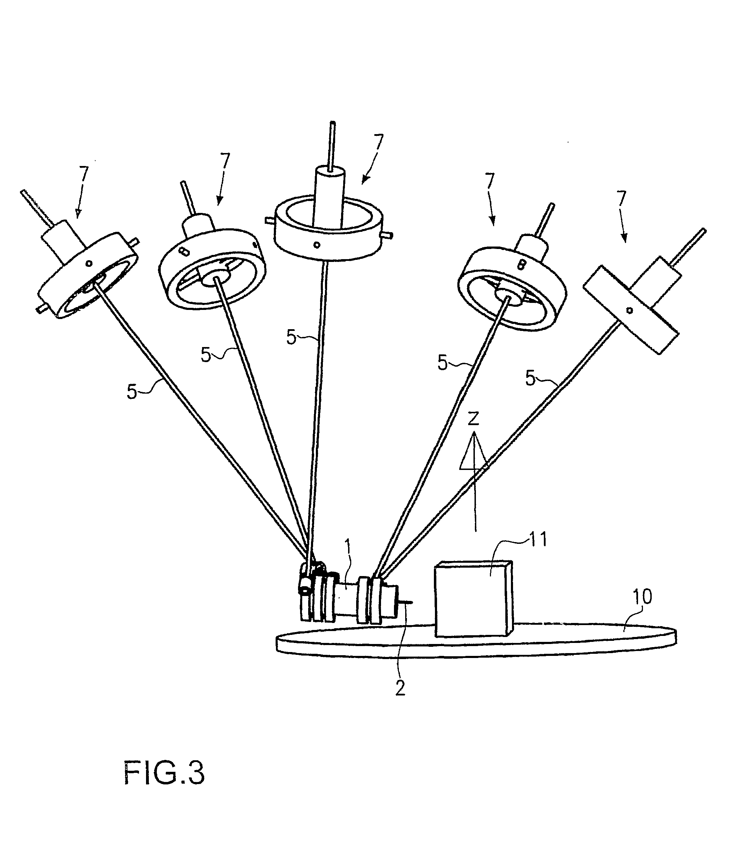

In Fig. 1 und 1 a ist ein erstes Ausführungsbeispiel der vorliegenden Bewegungsund/oder Positioniervorrichtung am Anwendungsfall einer Bearbeitungsmaschine dargestellt. Eine Bearbeitung eines in Fig. 3 gezeigten Werkstückes 11 erfolgt mittels einer Frässpindel 2, welche nachfolgend verallgemeinert als zu bewegendes bzw. zu positionierendes Objekt bezeichnet ist. Die Frässpindel 2 ist in einem rohrförmig ausgebildeten Spindelträger 1 drehbeweglich aufgenommen, wobei der Spindelträger 1 nachfolgend verallgemeinert als Objektträger bezeichnet wird, und wobei Spindelträger 1 (Objektträger) und Frässpindel 2 (Objekt) in diesem Ausführungsbeispiel eine mechanische Einheit bilden. Ein Antrieb und eine Steuerung einer Drehbewegung der Frässpindel 2 kann beispielsweise mittels einer in dem Spindelträger 1 angeordneten (nicht gezeigten) Antriebseinheit erfolgen.

Eine Längsachse des Objektträgers 1 und eine Längsachse der Frässpindel 2 sind koaxial zueinander angeordnet. Demzufolge stimmt in dem gezeigten Ausführungsbeispiel die Längsachse (Symmetrieachse) des Spindelträgers 1 mit der Längsachse der Spindel (Spindelachse) überein, wobei die vorliegende Bewegungs- und/oder Positioniervorrichtung nicht auf diese koaxiale Anordnung der Längsachsen beschränkt ist. Vielmehr kann insbesondere die Längsachse der Frässpindel 2 auch exzentrisch zu der Längsachse des Objektträgers 1 angeordnet sein, ohne dass wesentliche Änderungen der vorliegenden Bewegungs- und/oder Positioniervorrichtung notwendig wären.

In dem in den Fig. 1 und 1 a gezeigten Ausführungsbeispiel ist die Frässpindel 2 im Spindelträger 1 entlang einer als Z-Achse bezeichneten Achse angeordnet, d.h. in der in den Fig. 1 und 1 a gezeigten Stellung des Objektträgers 1 stimmt die Längsachse des Objektträgers 1 mit der dargestellten Z-Achse des kartesischen Koordinatensystems überein. Die Z-Achse bezeichnet dabei die vertikale Achse des kartesischen Koordinatensystems im Raum, wobei diese eine z-Achse im Koordinatensystem des (Maschinen-)Gestells 12 und eine z-Achse im Koordinatensystem des Objektträgers 1 umfassen kann. Die z-Achse im Koordinatensystem des (Maschinen-)Gestells 12 und die z-Achse im Koordinatensystem des Objektträgers 1 sind dabei ausschließlich in der Mittelpunktposition beider Achsen identisch.

Eine durch die weiteren Achsen des kartesischen Koordinatensystems aufgespannte X,Y-Ebene wird in Fig. 3 durch den Maschinentisch definiert. Der Objektträger 1 und damit auch die Frässpindel 2 wird bezüglich der Z-Achse und in einer zur X,Y-Ebene parallelen Ebene verschwenkt. Eine derartige Schwenkbewegung ist in Fig. 3 dargestellt, wobei der Objektträger 1 in der in Fig. 3 gezeigten Stellung gegenüber der Z-Achse und in einer zur X,Y-Ebene parallelen Ebene verschwenkt ist.

Der Objektträger 1 durchsetzt in dem in den Fig. 1, 1a und 3 gezeigten Ausführungsbeispiel fünf Gelenkringe 3,3a, wobei der Objektträger 1 in vier der fünf Gelenkringe 3 drehbeweglich um die Längsachse des Objektträgers 1 aufgenommen ist. Der weitere, fünfte Gelenkring 3a ist fest mit einer rohrförmigen Mantelfläche des Objektträgers 1 verbunden, wodurch derselbe drehfest bezüglich der Längsachse des Objektträgers 1 ist. Für die drehfeste Verbindung kann jede der fünf dargestellten Gelenkscheiben 3, 3a ausgewählt werden. Entscheidend ist lediglich, dass der Objektträger 1 in einem der Gelenkringe 3a drehfest und den entsprechend weiteren Gelenkringen 3 drehbar bezüglich der Längsachse des Objektträgers 1 aufgenommen ist.

In dem in den Fig. 1 und 1 a dargestellten Ausführungsbeispiel sind die Gelenkringe 3, 3a in zwei Gruppen mit einmal drei und einmal zwei Gelenkringen angeordnet, wobei diese beiden Gruppen in einem größeren Abstand zueinander angeordnet sind. Eine derartige Gruppierung und ein Abstand zwischen derartigen Gruppen kann anhand der konstruktiven Rahmenbedingungen bezüglich des vorhandenen Bauraumes, des notwendigen Arbeitsraumes und des notwendigen Schwenkwinkels gewählt werden.

Weiterhin ist jeder der fünf Gelenkringe 3, 3a mit einem weiteren Gelenk 4 mit jeweils einem Freiheitsgrad verbunden. Die vier Gelenkringe 3, in denen der Objektträger 1 drehbeweglich um die Längsachse des Objektträgers 1 aufgenommen ist, bilden jeweils mit einem dieser weiteren Gelenke 4 mit einem Freiheitsgrad eine sogenannte erste Gelenkanordnung.

Diese jeweils aus einem Gelenkring 3 und einem Gelenk 4 bestehende erste Gelenkanordnung weist folglich eine erste Gelenkachse auf, welche mit der Längsachse des Objektträgers 1 zusammenfällt. Die Spindelachse, d.h. die Längsachse des Objektes 2, ist in dem gezeigten Ausführungsbeispiel so angeordnet, dass diese mit eben dieser Gelenkachse der ersten Gelenkanordnung zusammenfällt. Weiterhin fallen die ersten Gelenkachsen sämtlicher erster Gelenkanordnungen mit ein- und derselben Längsachse der Objektträgers 1 zusammen.

Zudem weist die erste Gelenkanordnung eine zweite Gelenkachse auf, welche mit der Gelenkachse des Gelenkes 4 mit einem Freiheitsgrad zusammenfällt. Die zweiten Gelenkachsen der ersten Gelenkanordnung, also die Gelenkachsen der weiteren Gelenke 4 mit einem Freiheitsgrad, sind dabei senkrecht zur jeweiligen ersten Gelenkachse, also dementsprechend senkrecht zur Längsachse des Objektträgers angeordnet. Zudem sind die ersten und zweiten Gelenkachsen der ersten Gelenkanordnung schnittpunktfrei zueinander angeordnet.

Die beweglichen Bauteile der Gelenke 4 mit einem Freiheitsgrad sind fest mit Koppelgliedern 5, welche in den Fig. 1, 1a und 3 gezeigten Ausführungsbeispiel als Gewindestreben ausgebildet sind, verbunden. Folglich weist die vorliegende Bewegungsund/oder Positioniervorrichtung im gezeigten Ausführungsbeispiel fünf Gewindestreben 5 auf, welche auf der Gestellseite zu einer Halteeinrichtung mit Innengewinde, in diesem Ausführungsbeispiel jeweils einer Mutter 6, führen. Die Muttern 6 sind jeweils an einer Kardanischen Aufhängung 7 mit jeweils zwei Freiheitsgraden befestigt. Die Kardanischen Aufhängungen 7 wiederum sind einzeln an dem Gestell (auch als Rahmen bezeichnet) befestigt.

In den in den Fig. 1,2,3 dargestellten Ausführungsbeispielen weisen diese Kardanischen Aufhängungen 7 jeweils zwei rotatorische Freiheitsgrade im Gestell auf. Diese Kardanischen Aufhängungen 7 sind jeweils durch zwei ringförmige Elemente verwirklicht, wobei ein äußerer Ring einen inneren Ring aufnimmt und dieser innere Ring im äußeren Ring drehbeweglich um eine Achse des inneren Ringes gelagert ist. Der äußere Ring wiederum ist im Gestell 12 der vorliegenden Bewegungs- und/oder Positioniervorrichtung drehbeweglich um eine Achse des äußeren Ringes gelagert. In diesem Ausführungsbeispiel sind die Achsen des inneren und des äußeren Ringes senkrecht zueinander angeordnet.

Die Muttern 6 werden relativ zur Kardanischen Aufhängung 7 mittels einzelnen Antriebseinrichtungen drehend bezüglich der Längsachse der Gewindestreben bewegt. Durch eine derartige Drehung der Muttern 6 ändert sich ein Abstand zwischen einem Mittelpunkt der einzelnen Kardanischen Aufhängungen 7 und dem Objekt 2, also im gezeigten Ausführungsbeispiel der Frässpindel.

Mittels einer derartigen Veränderung eines Abstandes bezüglich aller fünf Gewindestreben 5 kann die Frässpindel 2 in fünf Freiheitsgraden bewegt werden.

Dementsprechend ist in den Fig. 1, 1a und 3 eine Bewegungs- und/oder Positioniervorrichtung mit fünf Koppelgliedern (Streben) gezeigt, welche ein Gestell mit einem zu positionierenden Objekt 2 verbinden, wobei vier der fünf Streben mit ersten Gelenkanordnungen, welche jeweils zwei Freiheitsgrade aufweisen, und eine Strebe mit einer zweiten Gelenkanordnung, welche einen Freiheitsgrad aufweist, an dem Objektträger 1 angebunden sind. Dabei ist jeweils eine der Gelenkachsen der ersten Gelenkanordnung, koaxial zu der Längsachse des Objektträgers 1 sind. Zudem sind die beiden Gelenkachsen der ersten Gelenkanordnung, welche jeweils zwei Freiheitsgrade aufweisen, schnittpunktfrei zueinander angeordnet.

Dabei ist in den Fig. 1,1 a und 3 ein Ausführungsbeispiel mit fünf identischen Gelenkkombinationen mit jeweils zwei Freiheitsgraden dargestellt, wobei die identischen Gelenkkombinationen jeweils einen Gelenkring 3, 3a und ein weiteren Gelenk 4 mit einem Freiheitsgrad umfassen, wobei vier der Gelenkkombinationen drehbar um die Längsachse des Objektträgers 1 und eine der Gelenkkombinationen drehfest um die Längsachse des Objektträgers 1 ausgebildet sind.

Die Forderung nach Modularität ist damit hochgradig erfüllt.

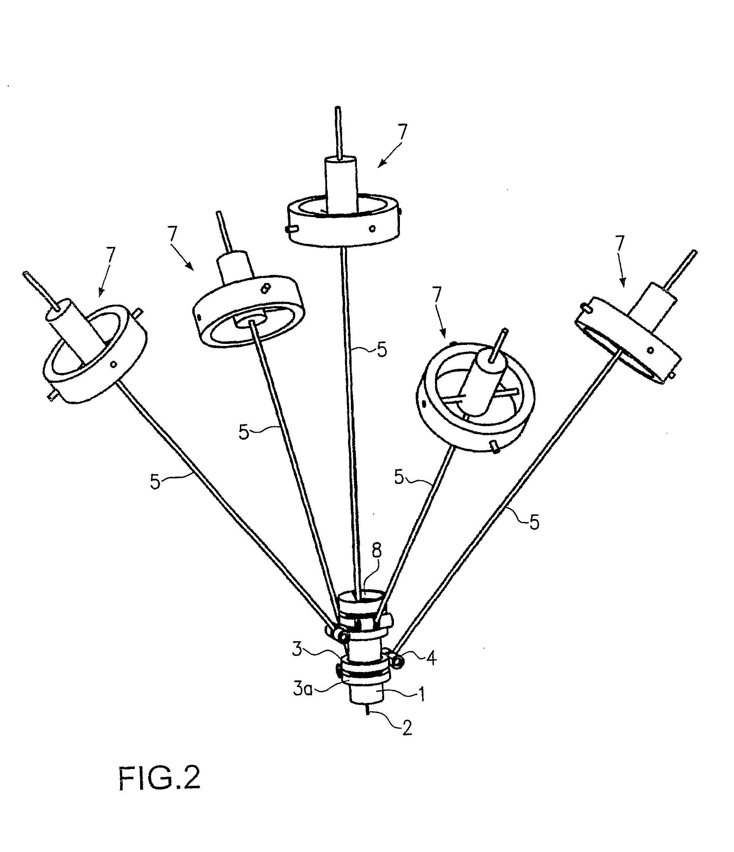

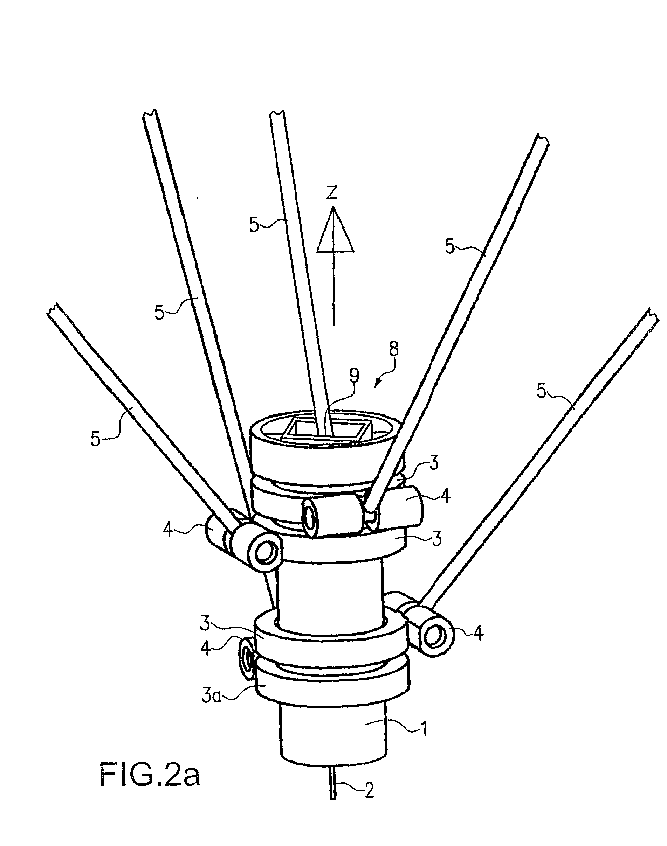

In den Fig. 2 und 2a ist ein weiteres Ausführungsbeispiel der vorliegenden Bewegungsund/oder Positioniervorrichtung zur fünfachsigen Bewegung und/oder Positionierung eines Objektes gezeigt. In diesem Ausführungsbeispiel ist einer der Gelenkringe 3 aus dem in den Fig. 1 und 1 a gezeigten Ausführungsbeispiel, welche den Objektträger 1 drehbeweglich aufnehmen, durch ein Kardanisches Gelenk, in diesem Ausführungsbeispiel ein Kreuzgelenk 8, ersetzt. Die Gelenkachsen dieses Kreuzgelenkes 8 schneiden sich in einem Gelenkpunkt 9, wobei dieser Gelenkpunkt 9 auf der Längsachse des Objektträges 1 angeordnet ist. Die Längsachse des Objektträgers 1 stimmt in diesem Ausführungsbeispiel mit der Spindelachse überein.

Weiterhin weist das in den Fig. 2 und 2a gezeigte Ausführungsbeispiel drei weitere Gelenkringe 3 auf, welche den Objektträger 1 drehbeweglich bezüglich der Längsachse desselben aufnehmen.

Zudem weist das in den Fig. 2 und 2a gezeigte Ausführungsbeispiel einen Gelenkring 3a auf, der den Objektträger 1 drehfest um die Längsachse desselben abstützt.

Die weiteren Merkmale des in den Fig. 2 und 2a gezeigten Ausführungsbeispieles entsprechen den Merkmalen des in Zusammenhang mit den Fig. 1 und 1 a beschriebenen Ausführungsbeispieles.

Folglich weist das in den Fig. 2 und 2a gezeigte Ausführungsbeispiel ein Kreuzgelenk 8 mit zwei Freiheitsgraden und sich in einem Gelenkpunkt 9 schneidenden Gelenkachsen auf, wobei dieser Gelenkpunkt 9 auf der Längsachse des Objektträgers 1, angeordnet ist.

Alle Mischformen zwischen den unterschiedlichen Ausführungsbeispielen, welche in den Fig. 1, bzw. 1a und 2 bzw. 2a gezeigt sind, sind realisierbar. Folglich kann ein Teil der Koppelglieder (Streben) mit ersten Gelenkanordnungen mit getrennten Gelenkachsen, von denen eine die Längsachse des Objektträgers 1 ist, und der entsprechend andere Teil mit ersten Gelenkanordnungen mit sich schneidenden Gelenkachsen, deren Schnittpunkt auf der Längsachse des Objektträgers 1 liegt, mit dem Objektträger 1 verbunden sein.

Bei allen diesen Mischformen ist eine der Streben über eine zweite Gelenkanordnung mit genau einem Freiheitsgrad mit dem Objektträger verbunden. Die zweite Gelenkanordnung ist also gegenüber den ersten Gelenkanordnung der übrigen Streben um ein Freiheitsgrad reduziert. Dadurch werden Torsionskräfte des Objektträgers 1 um die Längsachse des Objektträgers 1 als Biege- oder Torsionskräfte ausschließlich auf eben diese Strebe mit der zweiten Gelenkanordnung übertragen.

Die Anbindung der Streben 5 an dem Gestell 12 erfolgt, wie schon eingangs erläutert, über Kardanische Aufhängungen 7 mit jeweils zwei Freiheitsgraden. In dem in den Fig. 1, 1a, 2, 2a gezeigten Ausführungsbeispiel sind die Streben 5 als Gewindespindeln 5 ausgebildet, wobei eine Vorschubbewegung der Streben 5 durch Verdrehen der Mutter 6 um die Längsachse der entsprechenden Gewindespindel, realisiert ist. In den weiteren Freiheitsgraden der Kardanischen Aufhängung 7 ist die jeweilige Mutter 6 mit derselben fest verbunden, d.h. die Mutter 6 besitzt relativ zur Kardanischen Aufhängung 7 ausschließlich einen Drehfreiheitsgrad um eine Längsachse der entsprechenden Gewindespindel 5.

Alternativ zu der Ausbildung der Streben 5 (Koppelglieder) als Gewindespindeln oder gleichzeitig mit einer derartigen Ausbildung, können zwischen den Kardanischen Aufhängungen 7 und den ersten Gelenkanordnungen 3,4 oder 8 bzw. der zweiten Gelenkanordnung 3a,4 Hubzylinder (nicht dargestellt) angeordnet werden. In diesem Ausführungsbeispiel ist ein weiterer Freiheitsgrad zur Drehung der Streben um die Strebenachse durch Anordnung eines Antriebes realisiert. Eine Seite der Hubzylinder ist dabei in den Kardanischen Gelenken aufgenommen, die entsprechend weitere Seite ist mit den ersten Gelenkanordnungen bzw. der zweiten Gelenkanordnung verbunden.

Bei beiden genannten Ausführungsbeispielen der Koppelglieder 5 als Gewindespindel und/oder als Hubzylinder wird ein Abstand zwischen dem Mittelpunkt der Kardanischen Aufhängungen 7 und der Spindel 2 (dem Objekt) verändert.

Die vorliegende Bewegungs- und/oder Positioniervorrichtung ist jedoch nicht auf eine solche Veränderung des Abstandes beschränkt. Insbesondere kann bei einem festen Abstand zwischen dem Mittelpunkt der einzelnen Kardanischen Aufhängungen 7 und dem Objekt 2 eine Bewegung und/oder Positionierung des Objektes 2 über eine Verschiebung der Kardanischen Aufhängung 7 entlang einer steuerbaren Achse im Raum realisiert sein. Beispielsweise können diese steuerbare Achse jeweils entlang der Längsachse der einzelnen Koppelglieder 5 angeordnet werden.

Der bei der vorliegenden Bewegungs- und/oder Positioniervorrichtung nutzbare Arbeitsraum wird einerseits durch die Kollisionsbereiche der Streben 5 beschränkt, andererseits sinkt die Steifigkeit an bestimmten Positionen im Arbeitsraum ab. Folglich sind nicht alle Schwenkbewegungen des Objektes 2 bzw. des Objektträgers 1 erreichbar bzw. sollten aufgrund einer geringem Steifigkeit vermieden werden.

Der nutzbare Arbeitsraum ist durch Hinzufügen einer weiteren (redundanten) Drehachse (auch als Zusatzachse bezeichnet), welche im Maschinentisch 10 angeordnet ist, erweiterbar, wodurch eine volle 5-Seiten-Bearbeitung des Werkstückes 11 ermöglicht ist. Dabei kann die Drehachse des Maschinentisches 10 mit der Z-Achse zusammenfallen. Die zusätzliche Achse wirkt dabei im Verbund mit der vorstehend beschriebenen Parallelkinematik mit fünf Streben.

Ein derartiges Ausführungsbeispiel mit einem drehbaren Maschinentisch 10 ist in Fig. 3 dargestellt. Die Spindel 2 ist in der dargestellten Position um rund 90° bezüglich der Z-Achse geschwenkt. Eine weitere Schwenkbewegung in einer zur X,Y-Ebene parallelen Ebene ist nicht uneingeschränkt durchführbar, da Kollisionen zwischen den Koppelgliedern 5 auftreten würden. Mit dem Maschinentisch 10 wird die Zugänglichkeit zu dem Werkstück 11 auf allen fünf Seiten erreicht. Die hohe Dynamik der Parallelstruktur bleibt für lokale Bewegungen uneingeschränkt erhalten, wobei der Maschinentisch 10 nicht notwendigerweise eine hohe Dynamik aufweisen muss.

Eine weitere Vergrößerung des Arbeitsbereiches ist durch Integration der gesamten Anordnung in weitere Bewegungsvorrichtungen, insbesondere in sog. Portalanlagen, möglich.

Um NC-Programme mit maximal fünf programmierbaren Achsen auch auf derartigen Bewegungs- und/oder Positioniervorrichtungen mit einem Maschinentisch 10 mit einer weiteren Drehachse ohne Einschränkung anwenden zu können, wird die NC-Steuerung mit einem Programmbaustein versehen, welcher die Aufteilung der Programmierachsen auf die real vorhandenen sechs Maschinenachsen (Koppelglieder 5 und Drehachse des Maschinentisches) realisiert. Dazu berechnet die Steuerung zum Zeitpunkt der Begrenzung von Beschleunigungs- und Ruckwerten der Achsen (s.g. Look - Ahead) einen Gütewert (Gütekriterium), in welchen die Maschinensteifigkeit am Arbeitspunkt und der Abstand von Kollisionsbereichen einfließen. Die redundanten Zusatzachse(n) werden so angesteuert, dass dieser Gütewert möglichst groß wird.

Folglich kann das NC-Programm in fünf Achsen erstellt werden, wobei die Steuereinheit aus diesen fünf Programmierachsen sechs Maschinenachsen generiert, indem in der Steuereinheit ein Gütekriterium berechnet und für dieses Gütekriterium ein Extremwert (Minimum oder Maximum) bestimmt wird. Damit wird die Position der sechsten Achse eindeutig bestimmt. Die Steuereinheit kann also fünf Programmierachsen in sechs Maschinenachsen in Echtzeit umwandeln, indem diese das zusätzliche Gütekriterium, beispielsweise einen Abstand zu verbotenen Bereichen oder eine Steifigkeit der Anordnung, auswerten und den Extremwert sucht.

Dabei wird diesen Achsen aber nur ein solcher Geschwindigkeitsanteil an der Gesamtbewegung zugeordnet, dass durch sie nicht die Gesamtgeschwindigkeit reduziert werden muss. Folglich wird auch mit einer eventuell langsamer drehenden Zusatzachse eine volle fünf Seiten Bearbeitung in einer Aufspannung ohne Verlust der dynamischen Vorteile der vorliegenden Bewegungs- und/oder Positioniervorrichtung realisiert.

Die NC-Programme für konventionelle fünf Seiten Bearbeitung sind ohne Anpassung auf den kombinierten Maschinensystem lauffähig. Es ergibt sich eine Strategie für die Steuerung, welche es erlaubt, NC-Programme für fünf Achsen (Koppelglieder) auch dann affektiv abarbeiten zu können, wenn die Maschine mehr als fünf Achsen (redundante Achsen) aufweist.

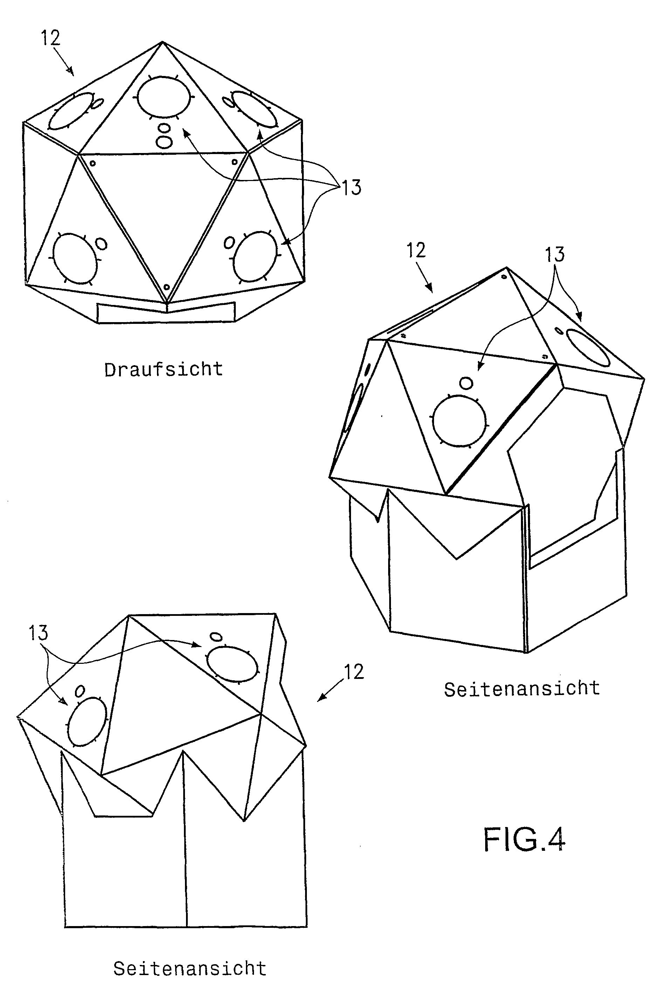

In Fig. 4 ist ein Ausführungsbeispiel des (Maschinen-)Gestells dargestellt. Das Gestell ist als lkosaeder ausgebildet. Die äußeren Gelenke der Koppelglieder 5, also die Kardanischen Gelenke 7, sind jeweils auf einer Fläche des lkosaeder - Grundkörpers angeordnet, wobei der lkosaeder - Grundkörper eine hohe Steifigkeit garantiert.

Eine entsprechende Auswahl der lkosaederflächen, auf welchen die einzelnen Kardanischen Gelenke 7 angeordnet werden, hängt von einer gewünschten Anordnung der Streben (Koppelglieder) relativ zum Objektträger 1 ab, wobei die gewünschte Anordnung der Koppelglieder 5 abhängig vom notwendigen Arbeitsraum und den notwendigen Schwenkwinkeln des Objektträgers 1 bestimmt wird.

Neben der beschriebenen Ausbildung des Gehäusegrundkörpers als Ikosaeder sind auch weitere Vielflächner als Gehäusegrundkörper realisierbar.

## Patentansprüche

1. Bewegungs- und/oder Positioniervorrichtung zur fünfachsigen Bewegung und/oder Positionierung eines Objektes (2), mit einem Objektträger (1) und fünf Koppelgliedern (5), welche den Objektträger (1) in einem Gestell (12) abstützen, wobei vier der fünf Koppelglieder (5) jeweils mittels einer ersten Gelenkanordnung (3,4 oder 8) mit jeweils zwei Freiheitsgraden und das entsprechend weitere der fünf Koppelglieder (5) mittels einer zweiten Gelenkanordnung (3a,4) mit einem Freiheitsgrad mit dem Objektträger (1) verbunden sind.

2. Bewegungs- und/oder Positioniervorrichtung nach Anspruch 1, **gekennzeichnet durch** eine erste Art an ersten Gelenkanordnungen (3,4) mit zwei Gelenkachsen, wobei eine erste der beiden Gelenkachsen mit einer Längsachse des Objektträgers (1) und/oder einer Längsachse des Objektes (2) überlagert ist und die beiden Gelenkachsen schnittpunktsfrei zueinander angeordnet sind.

3. Bewegungs- und/oder Positioniervorrichtung nach Anspruch 2, **dadurch gekennzeichnet, dass** die erste der beiden Gelenkachsen sämtlicher erster Gelenkanordnungen der ersten Art (3,4) mit der gleichen Längsachse des Objektträgers (1) und/oder des Objektes (2) überlagert angeordnet sind.

4. Bewegungs- und/oder Positioniervorrichtung nach Anspruch 2 oder 3, **dadurch gekennzeichnet, dass** die beiden Gelenkachsen der ersten Art an ersten Gelenkanordnungen (3,4) senkrecht zueinander angeordnet sind.

5. Bewegungs- und/oder Positioniervorrichtung nach zumindest einem der Ansprüche 2 bis 4, **dadurch gekennzeichnet, dass** die erste Art an ersten Gelenkanordnungen (3,4) einen Gelenkring (3) aufweist, welcher den Objektträger (1) drehbar um die Längsachse des Objektträgers (1) und/oder um die Längsachse des Objektes (2) abstützt, wobei der Gelenkring (3) mit dem zugehörigen Koppelglied (5) über ein weiteres Gelenk (4) mit einem Freiheitsgrad, insbesondere ein Scharniergelenk, verbunden ist.

6. Bewegungs- und/oder Positioniervorrichtung nach zumindest einem der Ansprüche 1 bis 5, **gekennzeichnet durch** eine zweite Art an ersten Gelenkanordnungen mit einem Kardanischen Gelenk (8), insbesondere einem Kreuzgelenk, mit zwei Gelenkachsen, wobei die Gelenkachsen desselben sich in einem Gelenkpunkt schneiden.

7. Bewegungs- und/oder Positioniervorrichtung nach Anspruch 6, **dadurch gekennzeichnet, dass** der Gelenkpunkt der zweiten Art an ersten Gelenkanordnungen auf der Längsachse des Objektträgers (1) und/oder der Längsachse des Objektes (2) angeordnet ist.

8. Bewegungs- und/oder Positioniervorrichtung nach zumindest einem der Ansprüche 1 bis 7, **dadurch gekennzeichnet, dass** die vier der fünf Koppelglieder (5) jeweils mittels einer ersten Gelenkanordnung der ersten Art (3,4) oder jeweils mittels einer ersten Gelenkanordnung der zweiten Art (8) oder mittels ersten Gelenkanordnungen der ersten und der zweiten Art (3,4 und 8) mit dem Objektträger (1) verbunden sind.

9. Bewegungs- und/oder Positioniervorrichtung nach zumindest einem der Ansprüche 2 bis 8, **dadurch gekennzeichnet, dass** die zweite Gelenkanordnung (3a,4) einen Gelenkring (3a) aufweist, wobei der Gelenkring (3a) den Objektträger (1) drehfest um die Längsachse (Z) des Objektträgers (1) und/oder die Längsachse des Objektes (2) abstützt und mit dem zugehörigen Koppelglied (5) über ein Gelenk (4) mit einem Freiheitsgrad, insbesondere ein Scharniergelenk, verbunden ist.

10. Bewegungs- und/oder Positioniervorrichtung nach zumindest einem der Ansprüche 2 bis 8, **dadurch gekennzeichnet, dass** die zweite Gelenkanordnung (3a,4) ein Gelenk (4) mit einem Freiheitsgrad, insbesondere ein Scharniergelenk, aufweist, wobei das Gelenk (4) das zugehörige Koppelglied (5) unmittelbar mit dem Objektträger (1) verbunden ist und denselben drehfest um die Längsachse des Objektträgers (1) abstützt.

11. Bewegungs- und/oder Positioniervorrichtung nach zumindest einem der Ansprüche 2 bis 10, **dadurch gekennzeichnet, dass** die Längsachse des Objektträgers (1) mit der Längsachse des Objektes (2) zusammenfällt.

12. Bewegungs- und/oder Positioniervorrichtung nach zumindest einem der Ansprüche 1 bis 11, **dadurch gekennzeichnet, dass** die Koppelglieder (5) jeweils mittels einer Kardanischen Aufhängung (7) mit zwei Freiheitsgraden im Gestell (12) gelagert sind.

13. Bewegungs- und/oder Positioniervorrichtung nach Anspruch 12, **dadurch gekennzeichnet, dass** ein Abstand zwischen den einzelnen Kardanischen Aufhängungen (7) und den ersten Gelenkanordnungen (3,4 oder 8) und/oder der zweiten Gelenkanordnung (3a,4) längenveränderlich ausgebildet ist.

14. Bewegungs- und/oder Positioniervorrichtung nach Anspruch 13, **dadurch gekennzeichnet, dass** die Koppelglieder (5) als Gewindespindeln ausgebildet sind, wobei die Gewindespindeln in den einzelnen Kardanischen Aufhängungen (7) jeweils in einer Halteeinrichtung mit Innengewinde (6), insbesondere eine Mutter, drehbeweglich aufgenommen sind, und wobei die Mutter bezüglich einer Längsachse der Gewindespindeln mittels einer Antriebseinrichtung drehbar ist.

15. Bewegungs- und/oder Positioniervorrichtung nach Anspruch 13 oder 14, **dadurch gekennzeichnet, dass** zwischen der einzelnen Kardanischen Aufhängungen (7) und den ersten Gelenkanordnungen (3,4 oder 8) oder der zweiten Gelenkanordnung (3a,4) jeweils eine längenveränderliche Einrichtungen, insbesondere ein Hubzylinder, angeordnet ist, wobei ein Drehfreiheitsgrad um eine Längsachse der Hubzylinder mittels einer Antriebseinrichtung ermöglicht ist.

16. Bewegungs- und/oder Positioniervorrichtung nach Anspruch 12, **dadurch gekennzeichnet, dass** ein Abstand zwischen den einzelnen Kardanischen Aufhängungen (7) und den ersten Gelenkanordnungen (3,4 oder 8) oder der zweiten Gelenkanordnung (3a,4) längenunveränderlich ist, wobei die Kardanischen Aufhängungen (7) jeweils entlang einer Achse im Raum beweglich ausgebildet sind.

17. Bewegungs- und/oder Positioniervorrichtung nach zumindest einem der Ansprüche 1 bis 16, **dadurch gekennzeichnet, dass** die Bewegungs- und/oder Positioniervorrichtung als Bearbeitungsmaschine ausgebildet ist, wobei das Objekt (2) eine Spindel und der Objektträger (1) ein Spindelgehäuse umfasst.

18. Bewegungs- und/oder Positioniervorrichtung nach zumindest einem der Ansprüche 1 bis 17, **gekennzeichnet durch** einen Maschinentisch (10) mit einer weiteren Drehachse, insbesondere zur Aufnahme eines zu bearbeitenden Werkstückes.

19. Bewegungs- und/oder Positioniervorrichtung nach Anspruch 18, **dadurch gekennzeichnet, dass** die Drehachse des Maschinentisches (10) der Längsachse des Objektträgers (1) und/oder der Längsachse des Objektes (2) überlagert ist.

20. Bewegungs- und/oder Positioniervorrichtung nach zumindest einem der Ansprüche 1 bis 19, **gekennzeichnet durch** eine Steuereinheit zur Steuerung der Bewegung und/oder Positionierung des Objektes (2) oder des Objektträgers (1).

21. Bewegungs- und/oder Positioniervorrichtung nach Anspruch 20, **gekennzeichnet durch** eine programmierbare Steuereinheit, insbesondere eine NC-Steuereinheit.

22. Bewegungs- und/oder Positioniervorrichtung nach Anspruch 21, **dadurch gekennzeichnet, dass** die NC-Steuereinheit genau fünf Programmierachsen enthält, wobei die NC-Steuereinheit einen Programmbaustein zu einer Erzeugung von sechs Maschinenachsen aus den fünf Programmierachsen aufweist, und wobei die sechs Maschinenachsen den einzelnen Koppelglieder (5) und der Drehachse des Maschinentisches (10) zuordenbar sind.

23. Bewegungs- und/oder Positioniervorrichtung nach Anspruch 22, **dadurch gekennzeichnet, dass** mittels des Programmbausteins der NC-Steuereinheit ein Gütekriterium berechenbar und für das Gütekriterium ein Extremwert bestimmbar ist, wobei mittels des Extremwertes eine Einstellung der Drehachse des Maschinentisches (10) bestimmbar ist.

24. Bewegungs- und/oder Positioniervorrichtung nach zumindest einem der Ansprüche 12 bis 23, **gekennzeichnet durch** ein als lkosaeder ausgebildetes Gestell (12), wobei die Kardanischen Aufhängungen (7) auf ausgewählten Flächen (13) desselben angeordnet sind.

## Claims

1. Movement and / or positioning device for pentaxial movement and / or positioning of an object (2), with an object holder (1) and five coupling links (5), which support the object holder (1) in a frame (12), wherein four of the five coupling links (5) are each connected to the object holder (1) by a first joint arrangement (3, 4 or 8) each with two degrees of freedom and the corresponding other of the five coupling links (5) is connected to the said object holder (1) by a second joint arrangement (3a, 4) with one degree of freedom.

2. Movement and / or positioning device according to Claim 1, **characterised by** a first type of first joint arrangements (3, 4) with two joint axes, wherein a first of the two joint axes is superimposed with a longitudinal axis of the object holder (1) and / or a longitudinal axis of the object (2) and the two joint axes are arranged free of intersection with respect to one another.

3. Movement and / or positioning device according to Claim 2, **characterised in that** the first of the two joint axes of all the first joint arrangements of the first type (3, 4) are arranged superimposed with the same longitudinal axis of the object holder (1) and / or of the object (2).

4. Movement and / or positioning device according to Claim 2 or 3, **characterised in that** the two joint axes of the first type of first joint arrangements (3, 4) are arranged perpendicular to one another.

5. Movement and / or positioning device according to at least one of the Claims 2 to 4, **characterised in that** the first type of the first joint arrangements (3, 4) exhibits a joint ring (3), which supports the object holder (1) rotationally about the longitudinal axis of the object holder (1) and / or about the longitudinal axis of the object (2), wherein the joint ring (3) is connected to the corresponding coupling link (5) by a further joint (4) with one degree of freedom, in particular a hinged joint.

6. Movement and / or positioning device according to at least one of the Claims 1 to 5, **characterised by** a second type of first joint arrangements with a cardan joint (8), in particular a universal joint, with two joint axes, wherein the joint axes of the universal joint intersect in a joint point.

7. Movement and / or positioning device according to Claim 6, **characterised in that** the joint point of the second type of first joint arrangements is arranged on the longitudinal axis of the object holder (1) and / or on the longitudinal axis of the object (2).

8. Movement and / or positioning device according to at least one of the Claims 1 to 7, **characterised in that** the four of the five coupling links (5) are each connected to the object holder (1) by a first joint arrangement of the first type (3, 4) or by a first joint arrangement of the second type (8) or by first joint arrangements of the first and second type (3, 4 and 8).

9. Movement and / or positioning device according to at least one of the Claims 2 to 8, **characterised in that** the second joint arrangement (3a, 4) exhibits a joint ring (3a), wherein the joint ring (3a) supports the object holder (1) rotationally rigidly about the longitudinal axis (Z) of the object holder (1) and / or the longitudinal axis of the object (2) and is connected to the corresponding coupling link (5) by a joint (4) with one degree of freedom, in particular a hinged joint.

10. Movement and / or positioning device according to at least one of the Claims 2 to 8, **characterised in that** the second joint arrangement (3a, 4) exhibits a joint (4) with one degree of freedom, in particular a hinged joint, wherein the joint (4) of the corresponding coupling link (5) is directly connected to the object holder (1) and supports it rotationally rigidly about the longitudinal axis of the object holder (1).

11. Movement and / or positioning device according to at least one of the Claims 2 to 10, **characterised in that** the longitudinal axis of the object holder (1) coincides with the longitudinal axis of the object (2).

12. Movement and / or positioning device according to at least one of the Claims 1 to 11, **characterised in that** the coupling links (5) each are supported in the frame (12) by a cardan suspension (7) with two degrees of freedom.

13. Movement and / or positioning device according to Claim 12, **characterised in that** a distance between the individual cardan suspensions (7) and the first joint arrangements (3, 4 or 8) and / or the second joint arrangement (3a, 4) is formed variable in length.

14. Movement and / or positioning device according to Claim 13, **characterised in that** the coupling links (5) are formed as: threaded spindles, wherein the threaded spindles are accommodated for rotational movement in the individual cardan suspensions (7) in each case in a retaining device with internal thread (6), in particular a nut, and wherein the nut can be rotated with respect to a longitudinal axis of the threaded spindles by a drive device.

15. Movement and / or positioning device according to Claim 13 or 14, **characterised in that** a device varying in length, especially a lifting cylinder, is arranged in each case between the individual cardan suspensions (7) and the first joint arrangements (3, 4 or 8) or the second joint arrangement (3a, 4), wherein one rotational degree of freedom is facilitated about a longitudinal axis of the lifting cylinders by a drive device.

16. Movement and / or positioning device according to Claim 12, **characterised in that** a distance between the individual cardan suspensions (7) and the first joint arrangements (3, 4 or 8) or the second joint arrangement (3a, 4) cannot be changed in length, wherein the cardan suspensions (7) are each formed for movement along an axis in the space.

17. Movement and / or positioning device according to at least one of the Claims 1 to 16, **characterised in that** the movement and / or positioning device is formed as a machine tool, wherein the object (2) includes a spindle and the object holder (1) a spindle housing.

18. Movement and / or positioning device according to at least one of the Claims 1 to 17, **characterised by** a machine table (10) with a further rotational axis, in particular for accommodating a work-piece to be machined.

19. Movement and / or positioning device according to Claim 18, **characterised in that** the rotational axis of the machine table (10) is superimposed on the longitudinal axis of the object holder (1) and / or on the longitudinal axis of the object (2).

20. Movement and / or positioning device according to at least one of the Claims 1 to 19, **characterised by** a control unit for the control of the movement and / or positioning of the object (2) or of the object holder (1).

21. Movement and / or positioning device according to Claim 20, **characterised by** a programmable control unit, in particular an NC control unit.

22. Movement and / or positioning device according to Claim 21, **characterised in that** the NC control unit exactly contains five programming axes, wherein the NC control unit exhibits a programming module for the production of six machine axes from the five programming axes, and wherein the six machine axes can be assigned to the individual coupling links (5) and the rotational axis of the machine table (10).

23. Movement and / or positioning device according to Claim 22, **characterised in that** a quality criterion can be computed by the programming module of the NC control unit and an extreme value can be determined for the quality criterion, wherein a setting of the rotational axis of the machine table (10) can be determined from the extreme value.

24. Movement and / or positioning device according to at least one of the Claims 12 to 23, **characterised by** a frame (12) formed as an icosahedron, wherein the cardan suspensions (7) are arranged on selected faces (13) of it.

## Revendications

1. Dispositif de déplacement et/ou de positionnement en vue du déplacement et/ou du positionnement selon cinq axes d'un objet (2), comprenant un porte-objet (1) et cinq éléments de couplage (5), lesquels soutiennent le porte-objet (1) dans un bâti (12), quatre des cinq éléments de couplage (5) étant reliés au porte-objet (1) chacun au moyen d'un premier agencement articulé (3, 4 ou 8) à respectivement deux degrés de liberté et l'autre correspondant des cinq éléments de couplage (5) au moyen d'un second agencement articulé (3a, 4) à un seul degré de liberté.

2. Dispositif de déplacement et/ou de positionnement selon la revendication 1, **caractérisé par** un premier type de premiers agencements articulés (3, 4) comprenant deux axes articulés, un premier des deux axes articulés étant superposé à un axe longitudinal du porte-objet (1) et/ou un axe longitudinal de l'objet (2) et les deux axes articulés étant disposés l'un par rapport à l'autre sans point d'intersection.

3. Dispositif de déplacement et/ou de positionnement selon la revendication 2, **caractérisé en ce que** le premier des deux axes articulés de tous les premiers agencements articulés du premier type (3, 4) est disposé en étant superposé au même axe longitudinal du porte-objet (1) et/ou de l'objet (2).

4. Dispositif de déplacement et/ou de positionnement selon la revendication 2 ou 3, **caractérisé en ce que** les deux axes articulés du premier type sur les premiers agencements articulés (3, 4) sont disposés perpendiculairement les uns aux autres.

5. Dispositif de déplacement et/ou de positionnement selon au moins une des revendications 2 à 4, **caractérisé en ce que** le premier type sur les premiers agencements articulés (3, 4) comprend un anneau articulé (3), lequel soutient le porte-objet (1) de façon rotative autour de l'axe longitudinal du porte-objet (1) et/ou autour de l'axe longitudinal de l'objet (2), l'anneau articulé (3) étant relié à l'élément de couplage (5) associé par l'intermédiaire d'une autre articulation (4) à un seul degré de liberté, en particulier une articulation à charnière.

6. Dispositif de déplacement et/ou de positionnement selon au moins une des revendications 1 à 5, **caractérisé par** un second type sur les premiers agencements articulés comprenant une articulation à cardan (8), en particulier une articulation à croisillons, avec deux axes articulés, les axes articulés de celle-ci se coupant en un point articulé.

7. Dispositif de déplacement et/ou de positionnement selon la revendication 6, **caractérisé en ce que** le point articulé du second type sur les premiers agencements articulés est disposé sur l'axe longitudinal du porte-objet (1) et/ou l'axe longitudinal de l'objet (2).

8. Dispositif de déplacement et/ou de positionnement selon au moins une des revendications 1 à 7, **caractérisé en ce que** les quatre des cinq éléments de couplage (5) sont reliés au porte-objet (1) respectivement au moyen d'un premier agencement articulé du premier type (3, 4) ou respectivement au moyen d'un premier agencement articulé du second type (8) ou au moyen de premiers agencements articulés des premier et second types (3, 4 et 8) .

9. Dispositif de déplacement et/ou de positionnement selon au moins une des revendications 2 à 8, **caractérisé en ce que** le second agencement articulé (3a, 4) comprend un anneau articulé (3a), l'anneau articulé (3a) soutenant le porte-objet (1) de manière solidaire en rotation autour de l'axe longitudinal (Z) du porte-objet (1) et/ou de l'axe longitudinal de l'objet (2) et étant relié à l'élément de couplage (5) associé par l'intermédiaire d'une articulation (4) à un degré de liberté, en particulier une articulation à charnière.

10. Dispositif de déplacement et/ou de positionnement selon au moins une des revendications 2 à 8, **caractérisé en ce que** le second agencement articulé (3a, 4) comprend une articulation (4) à un seul degré de liberté, en particulier une articulation à charnière, l'articulation (4) reliant directement l'élément de couplage (5) associé au porte-objet (1) et soutenant ledit porte-objet de manière solidaire en rotation autour de l'axe longitudinal du porte-objet (1).

11. Dispositif de déplacement et/ou de positionnement selon au moins une des revendications 2 à 10, **caractérisé en ce que** l'axe longitudinal du porte-objet (1) coïncide avec l'axe longitudinal de l'objet (2).

12. Dispositif de déplacement et/ou de positionnement selon au moins une des revendications 1 à 11, **caractérisé en ce que** les éléments de couplage (5) sont logés dans le bâti (12) respectivement au moyen d'une suspension à cardan (7) à deux degrés de liberté.

13. Dispositif de déplacement et/ou de positionnement selon la revendication 12, **caractérisé en ce qu'**une distance est conçue à longueur variable entre les suspensions à cardan (7) individuelles et les premiers agencements articulés (3, 4 ou 8) et/ou le second agencement articulé (3a, 4).

14. Dispositif de déplacement et/ou de positionnement selon la revendication 13, **caractérisé en ce que** les éléments de couplage (5) sont conçus sous forme de broches filetées, les broches filetées étant reçues de manière mobile en rotation dans les suspensions à cardan (7) individuelles respectivement dans un dispositif de maintien à taraudage (6), en particulier un écrou, et l'écrou étant mobile par rapport à un axe longitudinal des broches filetées au moyen d'un dispositif d'entraînement.

15. Dispositif de déplacement et/ou de positionnement selon la revendication 13 ou 14, **caractérisé en ce que** respectivement un dispositif à longueur variable, en particulier un cylindre de levage, est disposé entre les suspensions à cardan (7) individuelles et les premiers agencements articulés (3, 4 ou 8) ou le second agencement articulé (3a, 4), un degré de liberté de rotation autour d'un axe longitudinal du cylindre de levage au moyen d'un dispositif d'entraînement étant permis.

16. Dispositif de déplacement et/ou de positionnement selon la revendication 12, **caractérisé en ce qu'**une distance entre les suspensions à cardan (7) individuelles et les premiers agencements articulés (3, 4 ou 8) ou le second agencement articulé (3a, 4) est à longueur variable, les suspensions à cardan (7) étant conçues respectivement de manière à pouvoir se déplacer dans l'espace le long d'un axe.

17. Dispositif de déplacement et/ou de positionnement selon au moins une des revendications 1 à 16, **caractérisé en ce que** le dispositif de déplacement et/ou de positionnement est conçu comme une machine à usiner, l'objet (2) comprenant une broche et le porte-objet (1) un logement de broche.

18. Dispositif de déplacement et/ou de positionnement selon au moins une des revendications 1 à 17, **caractérisé par** une table de machine-outil (10) comprenant un autre axe de rotation, en particulier pour loger une autre pièce destinée à être usinée.

19. Dispositif de déplacement et/ou de positionnement selon la revendication 18, **caractérisé en ce que** l'axe de rotation de la table de machine-outil (10) est superposé à l'axe longitudinal du porte-objet (1) et/ou à l'axe longitudinal de l'objet (2).

20. Dispositif de déplacement et/ou de positionnement selon au moins une des revendications 1 à 19, **caractérisé par** une unité de commande destinée à commander le déplacement et/ou le positionnement de l'objet (2) ou du porte-objet (1).

21. Dispositif de déplacement et/ou de positionnement selon la revendication 20, **caractérisé par** une unité de commande programmable, en particulier une unité à commande numérique.

22. Dispositif de déplacement et/ou de positionnement selon la revendication 21, **caractérisé en ce que** l'unité à commande numérique contient exactement cinq axes de programmation, l'unité à commande numérique comprenant un module de programmation destiné à générer six axes mécaniques à partir des cinq axes de programmation, et les six axes mécaniques pouvant être associés aux éléments de couplage (5) individuels et à l'axe de rotation de la table de machine-outil (10).

23. Dispositif de déplacement et/ou de positionnement selon la revendication 22, **caractérisé en ce qu'**un critère de qualité peut être calculé au moyen du module de programmation de l'unité à commande numérique et une valeur extrême peut être définie pour le critère de qualité, un réglage de l'axe de rotation de la table de machine-outil (10) pouvant être défini au moyen de la valeur extrême.

24. Dispositif de déplacement et/ou de positionnement selon au moins une des revendications 12 à 23, **caractérisé par** un bâti (12) conçu comme un icosaèdre, les suspensions à cardan (7) étant disposées sur les surfaces sélectionnées (13) dudit bâti.
